# EUROPEAN PATENT SPECIFICATION

(11) **EP 1 396 334 B1**
(45) Date of publication and mention of the grant of the patent: **02.11.2006**
(21) Application number: 03019579.6
(22) Date of filing: 03.09.2003
(51) Int. Cl.: B29C 65/16

(54) **Laser welding material and laser welding method**
Material und Verfahren zum Laserschweissen
Matériau et procédé pour le soudage laser

(30) Priority: 05.09.2002 JP 2002259913
(43) Date of publication of application: 10.03.2004
(73) Proprietor: Ube Industries, Ltd., Ube-shi, Yamaguchi-ken 755-8633 (JP)
(72) Inventor: Katayama, Tsutomu, Ube Chemical Factory, Ube-shi Yamaguchi-ken (JP); Fukui, Yasuharu, Ube Chemical Factory, Ube-shi Yamaguchi-ken (JP)
(74) Representative: Wössner, Gottfried

(56) References cited:
- WO-A-01/44357

## Description

### FIELD OF THE INVENTION

The present invention relates to a laser welding material and laser welding method whereby resin members are welded by laser light irradiation.

### BACKGROUND ART

Conventional welding methods for bonding resin members include methods which employ adhesives, hot plate welding, vibration welding, ultrasonic welding and spin welding and, recently, injection welding methods such as DRI (Die Rotary Injection) or DSI (Die Slide Injection) and laser welding methods have become well-known.

Because methods of bonding using adhesives rely on manual operators, the procedures are inefficient. It is also impossible to achieve consistent bonding strength, and depending on the type of resin member, problems may occur such as inadequate adhesive strength. Environmental pollution is also a problem to be considered.

The disadvantages of hot plate welding include long cycles, the use of fillers and the inability to accomplish welding with water absorbed. Also, because the welding zone moves by 1-2 mm in vibration welding, it is unsuitable for precision parts and tends to result in clogging of filters due to creation of burrs, such that welding is hampered. The disadvantages of ultrasonic welding include low welding strength, poor airtightness and suitability only for small targets. Spin welding is only suitable for circular targets, requires a filler, and cannot be carried out with absorbed water.

DRI and DSI, which are examples of injection welding methods recently used for intake manifolds, produce high welding strength but require costly dies and improved molding machines, while they cannot be applied except to materials having particularly high fluidity.

On the other hand, laser welding is a type of welding method in which a laser light non-absorbing resin member and a laser light-absorbing resin member are contacted and welded. This approach involves irradiating the bonding surface with laser light from the non-absorbing resin member side to melt the absorbing resin member on the bonding surface by the laser light energy to achieve bonding (see, for example, Japanese Unexamined Patent Publication SHO No. 60-214931, Japanese Examined Patent Publication HEI No. 5-42336).

In such laser welding methods, however, two different types of resin members are used for bonding, a laser light-absorbing one and a non-absorbing one, and therefore a problem results in that the laser light non-absorbing resin member does not sufficiently melt at the bonding surface, resulting in weak or inconsistent bonding strength.

WO 01/44357 A1 discloses a dark-colored laser beam weldable thermoplastic molding material which is laser light transmitting in at least spectral partial regions of the wavelength region from 700 to 1200 nm. Such molding materials can be welded to laser light-absorbing molded parts by means of laser beam welding.

In light of these circumstances, it is an object of the present invention to provide a laser welding material and laser welding method which allow firm bonding of resin members, where the bonding of the resin members is accomplished by laser welding.

### SUMMARY OF THE INVENTION

In order to solve the aforementioned problems, the present inventors conducted much investigation on bonding methods employing laser light to allow firm bonding between a first resin member and a second resin member, and as a result we have found that such firm bonding can be achieved by using a laser light weakly-absorbing resin member as the first resin member irradiated with laser light.

Specifically, the invention provides:
(1) A set of resin compositions comprising a first resin composition for forming a first resin member which is laser light-weakly-absorbing and a second resin composition for forming a second resin member which is laser light-absorbing, whereby said first and second resin members can be superposed and, from the first resin member side to the interface between the superposed first and second resin members, laser light is irradiated to weld them together, said first resin composition comprising a first resin and a laser light-weakly-absorbing additive added to said first resin, wherein said laser light-weakly-absorbing additive is at least one type selected from the group consisting of ethylene and/or propylene-based copolymers, styrene-based copolymers, modified ethylene and/or propylene-based copolymers and modified styrene-based copolymers and wherein the laser light-weakly-absorbing additive is contained in an amount of 0.1-5 wt% based on the first resin composition.
(2) The set of resin compositions according to (1) above, wherein said second resin composition comprises a second resin and a laser light-absorbing additive added to said second resin.
(3) The set of resin compositions according to (2) above, wherein the first and second resins are polyamides.
(4) The set of resin compositions according to (2) or (3) above, wherein the laser light-weakly-absorbing additive is a substance with a laser light transmittance of 40-90%.
(5) The set of resin compositions according to (2) to (4) above, wherein said laser light-absorbing additive is at least one type selected from the group consisting of inorganic colorants such as carbon black and complex oxide pigments and organic colorants such as phthalocyanine pigments and polymethylene pigments.
(6) The set of resin compositions according to (2) to (5) above, wherein said second resin composition has a laser transmittance in a range of no greater than 5%.
(7) The set of resin compositions according to (2) to (6) above, wherein said first resin material and second resin material are in pellet form.
(8) A method for laser welding resin members, comprising
   providing a first resin member which is laser light-weakly-absorbing,
   providing a second resin member which is laser light-absorbing,
   superposing said first resin member and said resin member by which an interface is formed between said superposed first and second resin members, and
   irradiating laser light from the first resin member side to the interface between said superposed first and second resin members to weld them together, said first resin member being formed from a first resin composition which comprises a first resin and a laser light-weakly-absorbing additive, said laser light-weakly-absorbing additive being defined as in (1).
(9) The method according to (8) above, wherein said second resin member is formed form a second resin composition which is comprises a second resin and a laser light-absorbing additive.
(10) The method according to (9) above, wherein the first and second resins are polyamides.
(11) The method according to (1) to (10) above, wherein the laser light-weakly-absorbing additive is a substance with a laser light transmittance of 40-90%.
(12) The method according to above (9) to (11) above, wherein said second resin composition or member has a laser transmittance in a range of no greater than 5%.
(13) The method according to (8) to (12) above, which said first resin member is formed by molding the first resin composition.
(11) The method according to (8) to (13) above, which said second resin member is formed by molding the second resin composition.

The present invention further relates to the use of a copolymer selected from the group consisting of ethylene and/or propylene-based copolymers, styrene-based copolymers, modified ethylene and/or propylene-based copolymers and modified styrene-based copolymers as a laser light-weakly-absorbing additive to a first resin composition.

### BRIEF DESCRIPTION OF THE DRAWINGS

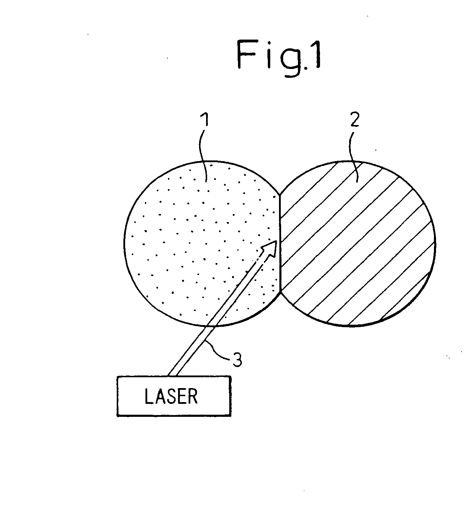

Fig. 1 is an illustration of the laser welding method of the invention. In the drawing, a laser light weakly-absorbing first resin member 1 and a laser light-absorbing second resin member 2 are superposed and irradiated with laser light from the first resin member 1 side, such that the first resin member 1 is heated and the second resin member 2 is heated to melting, to weld the resin members 1,2 together.

### DESCRIPTION OF THE PREFERRED EMBODIMENTS

In accordance with the present invention, the first resin member which is laser light weakly-absorbing and second resin member which is laser light-absorbing are used and superposed with each other, to which laser light is irradiated from the first resin member side to the interface between the first and second resin members, by which while laser light passes through the first resin member, the first resin member is heated but not melted, and the laser light reaches the interface of the second resin member to melt the second resin member and weld the first and second resin member together at the interface thereof.

To effect the above laser welding method, in accordance with the present invention, there is provided a laser welding material comprising a first resin composition for forming a first resin member which is laser light weakly-absorbing and a second resin composition for forming a second resin member which is laser light-absorbing.

"Laser light weakly-absorbing" means that laser light passes through a resin member but is absorbed to some extent. As a result, the resin member is heated but it is not sufficient to melt the resin member.

"Sufficient absorption" as referred to here means absorption of laser light by the laser light-irradiated portions to a degree sufficient to melt those portions. Thus, lack of sufficient absorption means that, despite slight absorption of laser light for example, most is transmitted and the resin at those portions fails to melt.

Most resins do not exhibit sufficient absorption of laser light. Therefore the first resin composition preferably comprises a first resin and a laser light weakly-absorbing additive added to the first resin.

The first resin may be any type of resin which does not exhibit sufficient absorption of laser light. As examples there may be mentioned polyamides, polypropylene and styrene-acrylonitrile copolymer. If necessary, a reinforcing fiber such as glass fiber or carbon fiber may also be added.

As polyamides to be used as the first resin there may be mentioned polyamides composed of a diamine and a dibasic acid, polyamides composed of a lactam or aminocarboxylic acid, and polyamides composed of copolymers of two or more of the foregoing.

As diamines there may be mentioned aliphatic diamines such as tetramethylenediamine, hexamethylenediamine, octamethylenediamine, nonamethylenediamine, undecamethylenediamine and dodecamethylenediamine, or diamines with aromatic/cyclic structures such as metaxylylenediamine.

As dicarboxylic acids there may be mentioned aliphatic dicarboxylic acids such as adipic acid, heptanedicarboxylic acid, octanedicarboxylic acid, nonanedicarboxylic acid, undecanedicarboxylic acid and dodecanedicarboxylic acid, or dicarboxylic acids with aromatic/cyclic structures such as terephthalic acid or isophthalic acid.

Lactams include C₆₋₁₂ lactams, and aminocarboxylic acids include C₆₋₁₂ aminocarboxylic acids. Specifically there may be mentioned 6-aminocaproic acid, 7-aminoheptanoic acid, 11-aminoundecanoic acid, 12-aminododecanoic acid, α-pyrrolidone, ε-caprolactam, ω-laurolactam and ε-enantholactam.

The laser light weakly-absorbing additive in the first resin composition may be a material which resonates at the wavelength of the laser light and absorbs a portion thereof while allowing a portion to pass through. Materials with a laser light transmittance of 40-90% are preferred. The laser light transmittance is the value of the laser light transmittance measured on a sample of a laser light-weakly-absorbing additive formed into the shape of an ASTM #1 dumbbell having a thickness of 3.2mm.

The content of the laser light-weakly-absorbing additive is 0.1-5 wt% with respect to the first resin composition or member. If the content is below 0.1 wt%, too little heat will be generated by absorption of the laser light energy, resulting in inadequate temperature increase of the first resin member and thus lowering the bonding strength of the joint.

As examples of laser light-weakly-absorbing additives there may be mentioned copolymers of ethylene and/or propylene and other olefins or vinyl-based compounds (hereinafter referred to as ethylene and/or propylene-based copolymers), block copolymers obtained by hydrogenating copolymers of styrene and conjugated dienes (hereinafter referred to as styrene-based copolymers), and modified ethylene and/or propylene-based copolymers or modified styrene-based copolymers obtained by adding α,β-unsaturated carboxylic acids or their derivatives to the aforementioned ethylene and/or propylene-based copolymers or styrene-based copolymers.

As ethylene and/or propylene-based copolymers there may be mentioned (ethylene and/or propylene)/α-olefin-based copolymers, (ethylene and/or propylene)/α,β-unsaturated carboxylic acid copolymers, (ethylene and/or propylene)/α,β-unsaturated carboxylic acid ester-based copolymers, ionomers, and the like.

An (ethylene and/or propylene)/α-olefin-based copolymer is a polymer obtained by copolymerizing ethylene and/or propylene with an α-olefin of 3 or more carbons, and as α-olefins of 3 or more carbons there may be mentioned propylene, 1-butene, 1-hexene, 1-decene, 4-methyl-1-butene and 4-methyl-1-pentene.

An (ethylene and/or propylene)/α,β-unsaturated carboxylic acid copolymer is a polymer obtained by copolymerizing ethylene and/or propylene with an α,β-unsaturated carboxylic acid monomer, and as α,β-unsaturated carboxylic acid monomers there may be mentioned acrylic acid, methacrylic acid, ethacrylic acid, maleic anhydride, and the like.

An (ethylene and/or propylene)/α,β-unsaturated carboxylic acid ester-based copolymer is a polymer obtained by copolymerizing ethylene and/or propylene with an α,β-unsaturated carboxylic acid ester monomer, and as α,β-unsaturated carboxylic acid ester monomers there may be mentioned acrylic acid esters such as methyl acrylate, ethyl acrylate, propyl acrylate and butyl acrylate, or methacrylic acid esters such as methyl methacrylate, ethyl methacrylate, propyl methacrylate and butyl methacrylate.

An ionomer is obtained by ionization of at least some of the carboxyl groups of a copolymer of an olefin and an α,β-unsaturated carboxylic acid by neutralization of a metal ion. Ethylene is preferably used as the olefin, and acrylic acid, methacrylic acid or the like may be used as the α,β-unsaturated carboxylic acid. The metal ion may be an ion of sodium, potassium, magnesium, calcium, zinc, etc.

A styrene-based copolymer is a block copolymer obtained by hydrogenating a block copolymer comprising polymer block A composed mainly of at least one and preferably two or more styrenes and polymer block B composed mainly of at least one conjugated diene, and for example, it may have the structure A-B-A, B-A-B-A, A-B-A-B-A, B-A-B-A-B or the like.

As examples of conjugated dienes there may be mentioned butadiene, isoprene, 1,3-pentadiene, 2,3-dimethyl-1,3-butadiene and the like.

As styrene-based copolymers there may be mentioned hydrogenated styrene-butadiene-styrene copolymer (SEBS), hydrogenated styrene-isoprene-styrene copolymer (SEPS) and the like.

Modified (ethylene and/or propylene)-based copolymers and modified styrene-based copolymers are obtained by adding compounds containing α,β-unsaturated carboxylic acid groups or their derivative groups to the above-mentioned (ethylene and/or propylene)-based copolymers and styrene-based copolymers, either in a solution state or molten state. The method of producing such modified (ethylene and/or propylene)-based copolymers and modified styrene-based copolymers may involve reacting an (ethylene and/or propylene)-based copolymer or styrene-based copolymer with a compound containing a carboxylic acid group or its derivative group, for example, in an extruder in the presence of a radical polymerization initiator.

As α,β-unsaturated carboxylic acids or their derivatives (hereinafter referred to simply as "unsaturated carboxylic acids") there may be mentioned acrylic acid, methacrylic acid, ethacrylic acid, maleic acid, fumaric acid or anhydrides or esters thereof.

A laser light non-absorbing coloring material may also be added to the first resin. As examples there may be mentioned organic dyes such as anthraquinone-based, perylene-based, perinone-based, heterocyclic-based, disazo-based and monoazo-based organic dyes. These dyes may also be used in combination.

There may also be added, to the first resin, functional additives including fillers, heat-resistant materials, weather-resistant materials, release agents, lubricants, antistatic agents, flame retardants, flame retardant aids, etc.

The second resin composition may be any resin composition which is laser light-absorbing and can be even consist of a single resin which is sufficiently laser light-absorbing. However, since most resin do not exhibit sufficient laser light-absorption, the second resin composition preferably comprises a second resin and a laser light-absorbing additive added to the second resin.

Upon irradiation with laser light, the laser light is absorbed and melts the second resin member. That is, according to the laser welding method of the invention, the laser light passing through the first resin member is absorbed so that it melts and welds the second resin member itself and the first resin member contacting therewith.

The second resin forming the second resin composition may be any type of resin which exhibits sufficient or insufficient absorption of laser light. As examples there may be mentioned resins such as polyamide, polypropylene, styrene-acrylonitrile copolymer and the like, as well as these resins reinforced with glass fiber or carbon fiber.

In addition to these components, there may also be added functional additives including fillers, heat-resistant materials, weather-resistant materials, release agents, lubricants, antistatic agents, flame retardants, flame retardant aids, etc.

The laser light-absorbing additive in the second resin composition or member may be an inorganic-based colorant such as carbon black or a compound oxide-based pigment, or an organic-based colorant such as a phthalocyanine-based pigment, polymethine-based pigment or the like.

The second resin composition or member preferably has an irradiated laser light transmittance of no greater than 5%. If the transmittance is greater than 5%, the irradiated laser light passes through, thereby reducing the amount of laser light energy absorbed by the second resin member while also resulting in loss of laser light energy.

Preferably, the first resin member and second resin member can be formed by molding the first and second resin compositions, respectively.

In the laser welding method of the invention, the first resin member and second resin member are superposed and laser light is irradiated on the superposed sections from the first resin member side to weld them together.

Irradiation of laser light from the first resin member side allows the laser light to pass through the laser light weakly-absorbing first resin member. The transmitted laser light reaches the second resin member surface and accumulates as energy. The accumulated energy distribution is an uneven energy distribution with respect to the original energy distribution of the laser light, due to scattering as it passes through the first resin member. Since heating and melting occur with the uneven energy distribution at the bonding surface, a joint is produced with the first resin member and second resin member interlocked together, and the resulting bonded joint is firm.

Also, by coloring the first resin member and second resin member with coloring agents of the same color, it is possible to bond resins of the same color together and thus improve the appearance of the bonded resin members.

As types of laser light to be used for the laser welding there may be mentioned glass: neodymium³⁺ lasers, YAG: neodymium³⁺ lasers, ruby lasers, helium-neon lasers, krypton lasers, argon lasers, H₂ lasers, N₂ lasers, semiconductor lasers and the like, among which semiconductor lasers are preferred.

The wavelength of the laser light will differ depending on the resin materials to be bonded and cannot be specified for all situations, but it is preferably 401 nm or greater. A wavelength of shorter than 400 nm may cause notable deterioration of the resin.

The laser light output may be adjusted based on the scanning speed and the absorption of the first resin member. An excessively low laser light output can hampe; mutual fusion of the bonding surfaces of the resin materials, while an excessively high output may vaporize the resin material, leading to degeneration and reduced strength.

### EXAMPLES

The present invention will now be explained through

### examples.

### [Materials used in the examples]

PA6: Polyamide 6 (1015B, product of Ube Industries, Ltd. m-EPR: Modified ethylene/α-olefin-based copolymer (Toughmer MC1307, product of Mitsui Chemical), 80% laser light transmittance

### [Measurement of laser light transmittance]

The laser light transmittance was measured using a power energy analyzer (FieldMaster™ GS LM-45 by Coherent Japan), with the sample formed into an ASTM #1 dumbbell shape having a thickness of 3.2mm.

### Examples 1-3 and Comparative Examples 1 and 2

For fabrication of the first resin member, a resin composition prepared by kneading PA6 and m-EPR in the proportions shown in Table 1 was formed into an ASTM #1 dumbbell shape having a thickness of 3.2mm.

For fabrication of the second resin member, a resin composition prepared by mixing carbon black at 0.3 wt% with PA6 was formed into an ASTM #1 dumbbell shape having a thickness of 3.2mm.

Next, the edges of the first resin member and second resin member were superposed and set in a semiconductor laser apparatus. Laser light was irradiated from the first resin member side to weld both members together.

The laser light used for laser welding had a wavelength of 940 nm, and irradiation was conducted with the output shown in Table 1.

**Table 1**

| | | Comp. Ex.1 | Example 1 | Example 2 | Example 3 | Comp. Ex. 2 |
|---|---|---|---|---|---|---|
| First resin member | PA6 (wt%) | 100 | 99 | 98 | 95 | 80 |
| | m-EPR (wt%) | 0 | 1 | 2 | 5 | 20 |
| | Transmit tance (%) | 60.1 | 29.3 | 24.4 | 20.9 | 11.4 |
| | Flexural modulus (GPa) | 2.57 | 2.58 | 2.53 | 2.43 | 1.84 |
| Laser output (W·sec/mm) | | 2.24 | 2.24 | 3.14 | 4.49 | 41.20 |
| Tensile strength (N) | | 372 | 790 | 1035 | 1018 | 951 |

The laser welding material of the present invention employs a laser light weakly-absorbing composition as the first resin member serving as a laser light-transmitting material, and therefore upon irradiation with laser light, the first resin member absorbs energy and releases heat, such that the temperature of the bonding surface section with the second resin member is increased to some extent. The second resin member in this state is also heated by absorption of laser light and melts while the first resin member also readily melts, and therefore the resin members at the joint become sufficiently interlocked to form a strong joint.

## Claims

1. A set of resin compositions comprising a first resin composition for forming a first resin member which is laser light-weakly-absorbing and a second resin composition for forming a second resin member which is laser light-absorbing, whereby said first and second resin members can be superposed and, from the first resin member side to the interface between the superposed first and second resin members, laser light is irradiated to weld them together; said first resin composition comprising a first resin and a laser light-weakly-absorbing additive added to said first resin, wherein said laser light-weakly-absorbing additive is at least one type selected from the group consisting of ethylene and/or propylene-based copolymers, styrene-based copolymers, modified ethylene and/or propylene-based copolymers and modified styrene-based copolymers, and wherein the laser light-weakly-absorbing additive is contained in an amount of 0.1-5 wt% based on the first resin composition.

2. The set of resin compositions according to claim 1, wherein said second resin composition comprises a second resin and a laser light-absorbing additive added to said second resin.

3. The set of resin compositions according to claim 2, wherein the first and second resin resins are polyamides.

4. The set of resin compositions according to claim 2 or 3, wherein the laser light-weakly-absorbing additive is a substance with a laser light transmittance of 40-90%.

5. The set of resin compositions according to any one of claims 2 to 4,
wherein said laser light-absorbing additive is at least one type selected from the group consisting of inorganic colorants such as carbon black and complex oxide pigments and organic colorants such as phthalocyanine pigments and polymethylene pigments.

6. The set of resin compositions according to any one of claims 2 to 5,
wherein said second resin composition has a laser transmittance in a range of no greater than 5%.

7. The set of resin compositions according to any one of claims 2 to 6,
wherein said first resin material and second resin material are in pellet form.

8. A method for laser welding resin members, comprising
providing a first resin member which is laser light-weakly-absorbing, providing a second resin member which is laser-light-absorbing, superposing said first resin member and said second resin member by which an interface is formed between said superposed first and second resin members, and
irradiating laser light from the first resin member side to the interface between said superposed first and second resin members to weld them together;
wherein said first resin member is formed from a first resin composition which comprises a first resin and a laser light-weakly-absorbing additive; said laser light-weakly-absorbing additive is at least one type selected from the group consisting of ethylene and/or propylene-based copolymers, styrene-based copolymers, modified ethylene and/or propylene-based copolymers and modified styrene-based copolymers, wherein the laser light-weakly-absorbing additive is contained in an amount of 0.1 to 5 wt%, based on the first resin composition.

9. The method according to claim 8, wherein said second resin member is formed from a second resin composition which comprises a second resin and a laser light-absorbing additive.

10. The method according to claim 9, wherein the first and second resins are polyamides.

11. The method according to any one of claims 8 to 10, wherein the laser light-weakly-absorbing additive is a substance with a laser light transmittance of 40-90%.

12. The method according to any one of claims 9 to 11, wherein said second
resin composition or member has a laser transmittance in a range of no greater than 5 %.

13. The method according to any one of claims 8 to 12, wherein said first resin member is formed by molding the first resin composition.

14. The method according to any one of claims 8 to 13, wherein said second resin member is formed by molding the second resin composition.

15. Use of a copolymer selected from the groups consisting of ethylene and/or propylene-based copolymers, styrene-based copolymers, modified ethylene and/or propylene-based copolymers and modified styrene-based copolymers as a laser light-weakly-absorbing additive in a first resin composition, in an amount of 0.1 to 5 wt% based on the first resin composition

16. The use of claim 15, wherein the first resin composition is to form a first laser light-weakly-absorbing resin member to be laser welded to a second laser light-absorbing resin member.

## Patentansprüche

1. Ein Satz von Harzzusammensetzungen, umfassend eine erste Harzzusammensetzung zum Bilden eines ersten Harzteils, welches schwach laserlichtabsorbierend ist, und eine zweite Harzzusammensetzung zum Bilden eines zweiten Harzteils, welches laserlichtabsorbierend ist, wobei das erste und das zweite Harzteil übereinander gelegt werden können und Laserlicht von der Seite des ersten Harzteils zu der Grenzfläche zwischen den übereinander gelegten beiden Harzteilen eingestrahlt wird, um sie miteinander zu verschweißen; wobei die erste Harzzusammensetzung ein erstes Harz und ein dem ersten Harz hinzugefügtes schwach laserlichtabsorbierendes Additiv umfasst, wobei das schwach laserlichtabsorbierende Additiv mindestens einen Typ umfasst, ausgewählt aus der aus Ethylen- und/oder Propylen-basierten Copolymeren, Styrol-basierten Copolymeren, modifizierten Ethylen- und/oder Propylen-basierten Copolymeren und modifizierten Styrol-basierten Copolymeren bestehenden Gruppe, und wobei das schwach laserlichtabsorbierende Additiv in einer Menge von 0,1-5 Gew.%, bezogen auf die erste Harzzusammensetzung, enthalten ist.

2. Satz von Harzzusammensetzungen nach Anspruch 1, wobei die zweite Harzzusammensetzung ein zweites Harz und ein dem zweiten Harz hinzugefügtes laserlichtabsorbierendes Additiv umfasst.

3. Satz von Harzzusammensetzungen nach Anspruch 2, wobei das erste und das zweite Harz Polyamide sind.

4. Satz von Harzzusammensetzungen nach Anspruch 2 oder 3, wobei das schwach laserlichtabsorbierende Additiv eine Substanz mit einer Laserlichtdurchlässigkeit von 40-90 % ist.

5. Satz von Harzzusammensetzungen nach einem der Ansprüche 2 bis 4,
wobei das laserlichtabsorbierende Additiv mindestens einen Typ umfasst, ausgewählt aus der aus anorganischen Farbmitteln, wie Carbon Black und komplexen Oxidpigmenten, und organischen Farbmitteln, wie Phthalocyanin-Pigmenten und Polymethylen-Pigmenten, bestehenden Gruppe.

6. Satz von Harzzusammensetzungen nach einem der Ansprüche 2 bis 5,
wobei die zweite Harzzusammensetzung eine Laserdurchlässigkeit in einem Bereich von nicht größer als 5 % aufweist.

7. Satz von Harzzusammensetzungen nach einem der Ansprüche 2 bis 6,
wobei das erste Harzmaterial und das zweite Harzmaterial in Pelletform vorliegen.

8. Verfahren zum Laserschweißen von Harzteilen, umfassend:
Bereitstellen eines ersten Harzteils, welches schwach laserlichtabsorbierend ist,
Bereitstellen eines zweiten Harzteils, welches laserlichtabsorbierend ist,
Übereinanderlegen des ersten Harzteils und des zweiten Harzteils, wodurch eine Grenzfläche zwischen den übereinander gelegten beiden Harzteilen gebildet wird, und
Einstrahlen von Laserlicht von der Seite des ersten Harzteils zu der Grenzfläche zwischen den übereinander gelegten beiden Harzteilen, um sie zusammenzuschweißen;
wobei das erste Harzteil aus einer ersten Harzzusammensetzung gebildet ist, welche ein erstes Harz und ein schwach laserlichtabsorbierendes Additiv umfasst; wobei das schwach laserlichtabsorbierende Additiv mindestens einen Typ umfasst, ausgewählt aus der aus Ethylen-und/oder Propylen-basierten Copolymeren, Styrol-basierten Copolymeren, modifizierten Ethylen- und/oder Propylen-basierten Copolymeren und modifizierten Styrol-basierten Copolymeren bestehenden Gruppe, wobei das schwach laserlichtabsorbierende Additiv in einer Menge von 0,1 bis 5 Gew.%, bezogen auf die erste Harzzusammensetzung, enthalten ist.

9. Verfahren nach Anspruch 8, wobei das zweite Harzteil aus einer zweiten Harzzusammensetzung gebildet ist, welche ein zweites Harz und ein laserlichtabsorbierendes Additiv umfasst.

10. Verfahren nach Anspruch 9, wobei das erste und das zweite Harz Polyamide sind.

11. Verfahren nach einem der Ansprüche 8 bis 10, wobei das schwach laserlichtabsorbierende Additiv eine Substanz mit einer Laserlichtdurchlässigkeit von 40-90 % ist.

12. Verfahren nach einem der Ansprüche 9 bis 11, wobei die zweite Harzzusammensetzung oder das zweite Harzteil eine Laserdurchlässigkeit in einem Bereich von nicht größer als 5 % aufweist.

13. Verfahren nach einem der Ansprüche 8 bis 12, wobei das erste Harzteil durch Formen der ersten Harzzusammensetzung gebildet wird.

14. Verfahren nach einem der Ansprüche 8 bis 13, wobei das zweite Harzteil durch Formen der zweiten Harzzusammensetzung gebildet wird.

15. Verwendung eines Copolymers, ausgewählt aus der aus Ethylen-und/oder Propylen-basierten Copolymeren, Styrol-basierten Copolymeren, modifizierten Ethylen- und/oder Propylen-basierten Copolymeren und modifizierten Styrol-basierten Copolymeren bestehenden Gruppe, als ein schwach laserlichtabsorbierendes Additiv in einer ersten Harzzusammensetzung in einer Menge von 0,1 bis 5 Gew.%, bezogen auf die erste Harzzusammensetzung.

16. Verwendung nach Anspruch 15, wobei die erste Harzzusammensetzung dafür gedacht ist, ein erstes, schwach laserlichtabsorbierendes Harzteil zu bilden, welches mit einem zweiten, laserlichtabsorbierenden Harzteil laserverschweißt werden soll.

## Revendications

1. Ensemble de compositions de résine comprenant une première composition de résine destinée à former un premier élément en résine absorbant faiblement la lumière laser et une seconde composition de résine destinée à former un second élément en résine absorbant la lumière laser, moyennant quoi lesdits premier et second éléments en résine peuvent être superposés et, du côté du premier élément en résine à l'interface entre les premier et second éléments en résine superposés, la lumière laser est irradiée pour les souder ensemble ; ladite première composition de résine comprenant une première résine et un additif absorbant faiblement la lumière laser ajouté à ladite première résine, où ledit additif absorbant faiblement la lumière laser est au moins un type choisi dans le groupe constitué des copolymères à base d'éthylène et/ou de propylène, des copolymères à base de styrène, des copolymères à base d'éthylène et/ou de propylène modifiés et des copolymères à base de styrène modifiés, et où l'additif absorbant faiblement la lumière laser est contenu en une quantité de 0,1 à 5 % en poids de la première composition de résine.

2. Ensemble de compositions de résine selon la revendication 1, dans lequel ladite seconde composition de résine comprend une seconde résine et un additif absorbant faiblement la lumière laser ajouté à ladite seconde résine.

3. Ensemble de compositions de résine selon la revendication 2, dans lequel les première et seconde résines sont des poly(amides).

4. Ensemble de compositions de résine selon la revendication 2 ou 3, dans lequel l'additif absorbant faiblement la lumière laser est une substance avec un facteur de transmission de la lumière laser de 40 à 90 %.

5. Ensemble de compositions de résine selon l'une quelconque des revendications 2 à 4, dans lequel ledit additif absorbant la lumière laser est au moins un type choisi parmi le groupe composé des colorants inorganiques tels que le noir de carbone et les pigments d'oxyde complexes et les colorants organiques tels que les pigments de phtalocyanine et les pigments de poly(méthylène).

6. Ensemble de compositions de résine selon l'une quelconque des revendications 2 à 5, dans lequel ladite seconde composition de résine a un facteur de transmission de la lumière laser dans une gamme non supérieure à 5 %.

7. Ensemble de compositions de résine selon l'une quelconque des revendications 2 à 6, dans lequel ledit premier matériau de résine et ledit second matériau de résine sont sous forme de pastille.

8. Procédé de soudage au laser d'éléments en résine, comprenant les étapes consistant à
proposer un premier élément en résine absorbant faiblement la lumière laser,
proposer un second élément en résine absorbant la lumière laser,
superposer ledit premier élément en résine et ledit second élément en résine par lesquels une interface est formée entre lesdits premier et second éléments en résine superposés, et
irradier de la lumière laser du côté du premier élément en résine à l'interface entre lesdits premier et second éléments en résine superposés afin de les souder ensemble ;
dans lequel ledit premier élément en résine est formé à partir d'une première composition de résine comprenant une première résine et un additif absorbant faiblement la lumière laser ; ledit additif absorbant faiblement la lumière laser est au moins un type choisi parmi le groupe composé des copolymères à base d'éthylène et/ou le propylène, des copolymères à base de styrène, des copolymères à base d'éthylène et/ou de propylène modifiés et des copolymères à base de styrène modifiés, où l'additif absorbant faiblement la lumière laser est contenu en une quantité de 0,1 à 5 % en poids de la première composition de résine.

9. Procédé selon la revendication 8, dans lequel ledit second élément en résine est formé à partir d'une seconde composition de résine qui comprend une seconde résine et un additif absorbant la lumière laser.

10. Procédé selon la revendication 9, dans lequel les première et seconde résines sont des poly(amides).

11. Procédé selon l'une quelconque des revendications 8 à 10, dans lequel l'additif absorbant faiblement la lumière laser est une substance avec un facteur de transmission de la lumière laser de 40 à 90 %.

12. Procédé selon l'une quelconque des revendications 9 à 11, dans lequel ladite seconde composition de résine ou élément a un facteur de transmission de la lumière laser dans une gamme non supérieure à 5 %.

13. Procédé selon l'une quelconque des revendications 8 à 12, dans lequel ledit premier élément en résine est formé par moulage de la première composition de résine.

14. Procédé selon l'une quelconque des revendications 8 à 13, dans lequel ledit second élément en résine est formé par moulage de la seconde composition de résine.

15. Utilisation d'un copolymère choisi parmi les groupes composés des copolymères à base d'éthylène et/ou de propylène, des copolymères à base de styrène, des copolymères à base d'éthylène et/ou de propylène modifiés et des copolymères à base de styrène modifiés comme additif absorbant faiblement la lumière laser dans une première composition de résine, en une quantité de 0,1 à 5 % en poids de la première composition de résine.

16. Utilisation selon la revendication 15, dans laquelle la première composition de résine consiste à former un premier élément en résine absorbant faiblement la lumière laser à souder au laser avec un second élément en résine absorbant la lumière laser.
